# EUROPEAN PATENT APPLICATION

(11) **EP 4 851 735 A1**
(43) Date of publication of application: **09.12.2026**
(21) Application number: 25305800.2
(22) Date of filing: 03.06.2025
(51) Int. Cl.: G05B 19/05, G06F 11/3668

(54) **METHOD OF TESTING A CONTROL PROGRAM IN ONE OR MORE PROGRAMMABLE LOGIC CONTROLLERS (PLC) OF AN INDUSTRIAL AUTOMATION SYSTEM, AND EXECUTION ENVIRONMENT, COMPUTER PROGRAM AND COMPUTER READABLE STORAGE MEDIUM THEREOF**

(71) Applicant: SCHNEIDER ELECTRIC INDUSTRIES SAS, 92500 Rueil-Malmaison (FR)
(72) Inventor: Kempf, Johannes, 63920 Großheubach (DE); Diehm, Sebastian, 97907 Hasloch (DE); Hermann, Marcus, 97837 Erlenbach (DE)
(74) Representative: Manitz Finsterwald Patent- und Rechtsanwaltspartnerschaft mbB

(57) **Abstract**

A method of testing a control program implemented in one programmable logic controller, PLC, or a plurality of collaborating PLCs of an industrial automation system, comprising: adding a delay to the control program; running the industrial automation system; checking whether the control program is completely executed within a predefined time period, wherein the predefined time period starts at a starting time point at which the control program is triggered to be executed.

## Description

The present disclosure relates to a programmable logic controller, PLC, for an industrial automation system.

Programmable logic controllers are widely used in industrial automation systems for automated processes, e.g., in an automated production line in a factory for filling liquid into bottles, for printing marks on products, etc.

A PLC comprises a central processing unit, CPU, which executes programs stored in the PLC, including one or more system programs as firmware and one or more control programs programmed by user. A control program may be used for controlling a process in an industrial automation system, e.g., for detecting the position of a product and then instructing a mark printing device to print a mark on the product at an accurate time point.

Since the CPU of a PLC is responsible for executing all the system programs and control programs stored in the PLC, time-slices are normally assigned for the CPU to alternately execute different programs. For example, a time-slice is assigned to a first program and the CPU executes the first program within the assigned time-slice. It often occurs that the CPU cannot completely execute the first program within the assigned time-slice but has to switch to execute a second program in the next time-slice. In this situation, the execution of the first program can be continued until a further time-slice is assigned to it. In other words, the execution of a program in the PLC may be distributed into a plurality of time-slices and in-between one or more other programs may be executed. As a result, the execution time of a program is in fact not fixed, but depends on the other programs concurrently executed by the PLC, e.g., depends on the number, the complexity, and the priority of the other programs.

In view of the above, it is desired to test whether the execution time of a control program can satisfy the requirement of the industrial automation system, in particular, whether a control program, once being triggered or planned to be triggered, can complete its desired function even in a worst case.

The present invention provides a practical solution for the above-mentioned test.

A method of testing a control program implemented in one programmable logic controller, PLC, or a plurality of collaborating PLCs of an industrial automation system, the method comprising: adding a delay to the control program; running the industrial automation system; checking whether the control program is completely executed within a predefined time period, wherein the predefined time period starts at a starting time point at which the control program is triggered, or is planned to be triggered, to be executed.

In a preferable embodiment, the delay is set as: a value of time period; or a percentage of the predefined time period; or a percentage of the rest time of the predefined time period; or until a percentage of the predefined time period; or until an amount of time before the end of the predefined time period.

In a preferable embodiment, the delay as a whole is added to the control program; or the delay is divided into a plurality of delay parts and the plurality of delay parts are added into the control program in a distributed manner.

In a preferable embodiment, the delay as a whole or a delay part is added to the control program through adding a delay code into the control program, herein the delay code includes at least one of: a loop code; one or more No-Operation instructions; a sleep instruction or a wait instruction; a timer instruction; an instruction for activate spin lock.

In a preferable embodiment, the control program comprises a functional block, FB, chain, including a plurality of FBs, and the delay as a whole or a delay part is added at the beginning of one of the FBs or at the end of one of the FBs.

In a preferable embodiment, the delay as a whole or a delay part is added at the end of an FB but before the FB sends out an output value to a down-streaming FB.

In a preferable embodiment, when the delay as a whole or a delay part is added between two adjacent FBs in the FB chain including a first FB and a second FB as the immediately down-streaming FB of the first FB, and the first FB and second FB are implemented respectfully in two of the collaborating PLCs, the delay as a whole or the delay part is added before sending the output value from the first FB to the second FB to the communication link between the two collaborating PLCs.

In a preferable embodiment, the step of checking whether the control program is completely executed within the predefined time period is implemented through a watchdog.

An execution environment, adapted for executing the above method.

In a preferable embodiment, the execution environment comprises an emulation environment that emulates the operation of the industrial automation system and a computer program that controls the emulation.

In a preferable embodiment, execution environment comprises a real establishment of the industrial automation system and a computer program that controls the programming of the control program to be tested.

A computer program including instructions, when executed by a computing device, enabling the computing device to control the performance the above method.

A computer readable storage medium, storing the above computer program.
Fig. 1 shows an exemplary industrial automation system
Fig. 2 shows an exemplary functional block chain
Fig. 3 shows an example

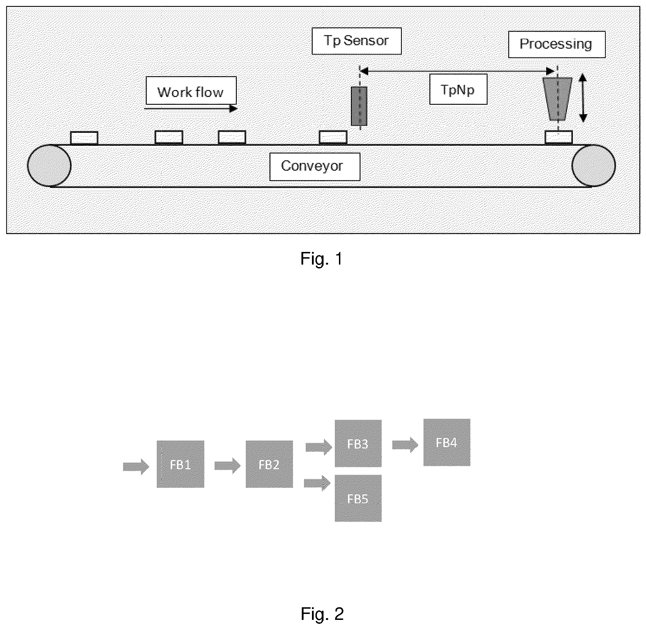

Fig. 1 shows an exemplary industrial automation system for printing a mark on a product. In Fig. 1, products are placed on the belt of a conveyor and transferred to the mark printer as an actuator of the printing process, wherein the distance intervals between each two adjacent products on the belt are often not be the same. A sensor, e.g., a touch-probe sensor, is placed at a fixed position before the actuator. Once the sensor detects a product, it sends a sensor signal to a PLC for controlling the printing process.

In the PLC, a control program is stored, which processes the sensor signal, calculates the time point at which the actuator should process, and then generates an instruction signal to the actuator. In such a situation, the control program may include three functional blocks, FBs, forming a FB chain, wherein the first FB processes the sensor signal, the second FB calculates the time point, and the third FB generates and sends the instruction signal. The instruction signal may be a simple instruction that instructs the actuator to process, while the third FB may send the instruction to the I/O controller of the PLC and instruct the I/O controller to wait for a certain time before sending out the instruction to the actuator, wherein the certain time waited depends on the calculated time point at which the actuator should process. Alternatively, if the actuator itself supports a waiting time, the third FB may generate an instruction with a waiting time depending on the calculated the time point and then instructs the I/O controller of the PLC to send out the instruction immediately to the actuator.

In the above example, the available reaction time for the PLC to execute the control program can basically be obtained by: (sensor to actuator physical distance / speed of product) - (sensor electromechanical reaction time + actuator electromechanical reaction time).

The sensor to actuator physical distance is a known distance between the sensor and actuator configured in the automation system. The speed of product is in fact the speed of the belt of the conveyor, which is also a known value configured in the automation system. The sensor's electromechanical reaction time includes the time duration needed by the sensor to generate and send the sensor signal after it detects the product, the time duration needed to transmit the sensor signal to the PLC, and the time duration needed by the PLC to trigger the execution of the control program after receiving the sensor signal. The actuator electromechanical reaction time includes the time duration needed by the PLC to send the instruction to the actuator and the time duration needed by the actuator to perform the process.

After knowing the available reaction time, it is desired to test whether the control program can be completely executed by the PLC within the available reaction time.

The industrial automation system shown in Fig. 1 is merely a simple example showing the basic mechanism. In a more complicated system, the same PLC may be responsible for performing many other tasks for other processes in an industrial automation system, e.g., under IEC 61131, or the PLC is collaborating with one or more other PLCs for other tasks of an industrial automation system, e.g., under IEC 61499. Further, a control program for a more complicated task may have much more FBs, e.g., as shown in Fig. 2, of which the program codes may even be stored in and executed respectively by two or more collaborating PLCs, while each of the collaborating PLCs may be responsible for executing other programs for other tasks.

In view of the above, the execution time of a control program in an industrial automation system may be affected by other programs in the PLC or PLCs of the system, and thus is indeed a random value resulted from a random process. In a best-case of the random process, there is no other program to be executed at all during the execution of a control program, the execution time of the control program would be minimum depending only on the code efficiency of the control program itself. On the other side, in a worst-case of the random process, the execution of a control program may be interrupted by many other programs in the system and could not be completely executed within the available reaction time of its task, even if the control program itself is very efficiently programmed.

Hence, it is in particular desired to test whether the control program can be completely executed by the PLC or PLCs within the available reaction time of its task even in a worst-case situation.

Such a test is normally performed in an emulation environment of the industrial automation system or even using a real established industrial automation system. However, during the running of the emulation environment or the real industrial automation system, the worst-case of the above-mentioned random process can normally not be reached since it occurs very rarely. For example, after 100 tests the tested control program can always be completely executed within 75% of the available reaction time, while a real industrial automation system is supposed to be operated millions of times in its lifetime and thus a worst-case might occur sometimes, in which the completion of the execution of the control program may be very close to or even after the end of the available reaction time.

Therefore, a method is proposed to add a delay, or called as an artificial delay, to the control program to be tested, which can push the test closer to a worst-case situation when the control program is tested in the emulation environment or the real industrial automation system.

In particular, it is proposed a method of testing a control program implemented in one programmable logic controller, PLC, of an industrial automation system or implemented in a plurality of collaborating PLCs of an industrial automation system, the method comprising: adding a delay to the control program; running the industrial automation system; checking whether the control program is completely executed within a predefined time period, wherein the predefined time period starts at a starting time point at which the control program is triggered to be executed. Alternatively, the predefined time period starts at a starting time point at which the control program is planned to be triggered to be executed, if the system includes a planning function for triggering a control program. For example, when an FB receives a sensor signal, which should trigger the execution of a control program for processing the sensed data, the planning function of the system may place this triggering action into a triggering queue and triggers it later due to other tasks in the system. In such a case, the planning function introduces a further delay, which should also be taken into consideration.

The running of the industrial automation system may be performed in an emulation environment of the industrial automation system or using a real established industrial automation system. The predefined time period corresponds to the available reaction time of the task to be accomplished by the control program to be tested.

The predefined time period may be realized by a timer, which is started at a starting time point at which the control program is triggered, or planned to be triggered, to be executed, and the time period of the timer is set based on the available reaction time of the task. The timer may be set in a software that controls an emulation. Alternatively, the timer may be the timer of a watchdog implemented in the PLC for the control program to be tested.

The delay to be added may be set as one of the followings forms:
(i) a value of time period;
(ii) a percentage of the predefined time period;
(iii) a percentage of the rest time of the predefined time period;
(iv) until a percentage of the predefined time period;
(v) until an amount of time before the end of the predefined time period.

The length of the delay relates to how close the random process can be pushed to the worst-case. The random process itself cannot be accurately predicted, and thus it is not really possible to exactly know where is the worst-case. Therefore, the length of the delay to be added may be set empirically.

For example, a tester of a control program may empirically estimate a length of the delay to be added according to, e.g., the complexity of the industrial system, the number of collaborating PLCs, and the number, complexity, priority of other programs in the PLCs, the complexity and priority of the control program to be tested. The estimated length of the delay may be adjusted for different test instances.

For example, after a certain number of tests without any added delay, it is determined that the control program can always be completely executed within the predefined time period. Then, an artificial delay may be added into the control program, of which the length may be set as a value of time (i.e., form (i)), e.g., 20 ms according to an empirical estimation. Then a certain number of tests are conducted with this added delay.

If the result of the tests shows that the control program can still always be completely executed within the predefined time period, it may be determined that the control program passes the test so that the control program can be finally used in the industrial automation system, while it may also be determined to increase the delay, e.g., to 25 ms, for further tests.

On the other hand, if the result shows that in one or more of the tests the control program cannot be completely executed within the predefined period, it may be determined that an optimization is needed, e.g., by optimizing the tested control program itself or by optimizing other control programs in the PLCs, while it may also be determined to conduct more tests with a reduced delay, e.g., 15 ms.

Instead of setting the delay as a value of time, the length of the delay may also be set as a percentage of the predefined time period (i.e., form (ii)), e.g., 20%, to see whether tests with the delay may result in an execution time beyond the predefined time period. The percentage may be adjusted for different test instances, as discussed above. Since the value of the predefined time period may be obtained from the configurations of the industrial automation system, a percentage thereof can also be determined easily as a value of time period, which is then similar to form (i).

Alternatively, the length of the delay may also be set as a percentage of the rest time of the predefined time period (i.e., form (iii)). For example, the control program to be tested is triggered by a sensor signal and thus the timer for the predefined time period, e.g., 100 ms, is started. However, the CPU is busy in processing other tasks and the execution of the control program to be tested starts at a time point, at which for example 20 ms of the predefined time period has lapsed, i.e., the rest time of the predefined time period in this example is 80 ms. In this case, the length of the delay may be set as a percentage of 80 ms, e.g., 20% of 80 ms. The percentage may be adjusted for different test instances, as discussed above. In this alternative, the emulation environment or the real established industrial automation system needs to provide a mechanism to obtain the rest time of the predefined time period, e.g., reading the value of the timer for the predefined time period by the software that controls the emulation when the CPU starts the execution of the control program to be tested, or for example by adding program codes at the beginning of the control program to be tested to read the value of the timer of the watchdog corresponding to the predefined time period. Based on the read value of the timer, the time lapsed can be obtained. Then, the rest time of the predefined time period can be calculated based on the read value of the timer, i.e., the time lapsed, and the predefined time period, and then the percentage of the reset time can also be calculated based thereon.

Alternatively, the delay may also be set as until a percentage of the predefined time period (i.e., form (iv)), e.g., until 90% of the predefined time period. The percentage may be adjusted for different test instances, as discussed above. In this alternative, the emulation environment or the real established industrial automation system needs to provide a mechanism to obtain the time lapsed or the rest time of the predefined time period, as described above for form (iii). With the obtained time lapsed or the rest time, the length of the delay in form (iv) can be calculated. For example, the predefined time period is 100 ms, the lapsed time obtained is 60 ms, and the delay is set as until 90% of the predefined time period, then the length of the delay is: 100 ms X 90% - 60 ms = 30 ms. For another example, the predefined time period is 100 ms, the rest time obtained is 40 ms, and the delay is set as until 90% of the predefined time period, then the length of the delay is: 40 ms - 100 ms X (1 - 90%) = 30 ms. In form (iv), it is also possible that the time lapsed has already surpassed the percentage of the predefined time period for the delay. In this case, no delay will be added.

Alternatively, the delay may also be set as until an amount of time before the end of the predefined time period (i.e., form (v)), e.g., 20 ms before the end of the predefined time period. The amount of time may be adjusted for different test instances, as discussed above. In this alternative, the emulation environment or the real established industrial automation system needs to provide a mechanism to obtain the time lapsed or the rest time of the predefined time period, as described above for form (iii). For example, the predefined time period is 100 ms, the lapsed time obtained is 60 ms, and the delay is set as 20ms before the end of the predefined time period, then the length of the delay is: 100 ms - 60 ms - 20 ms = 20 ms. For another example, the predefined time period is 100 ms, the rest time obtained is 40 ms, and the delay is set as 20ms before the end of the predefined time period, then the length of the delay is: 40 ms -20 ms = 20 ms. In form (v), it is also possible that the time lapsed has already surpassed the amount of time before the end of the predefined time period. In this case, no delay will be added.

The delay may be added at the beginning of the control program, or at any propriate position inside the control program, e.g., at the end of a FB or at the beginning of a subsequent FB.

The delay may be added as a whole to the control program. For example, the delay may be added as a whole at the beginning of the control program, so that the whole control program will be executed after the added delay; or the delay may be added as a whole at any propriate position inside the control program, e.g., between two FBs, so that only the programs codes after the added delay will be artificially delayed in the execution.

The delay may also be divided into a plurality of delay parts and the plurality of delay parts are added to the control program in a distributed manner. For example, the control program for the example shown in Fig. 1 may include three FBs. The length of the delay may be divided into two delay parts, with one being added between the first and second FBs and the other being added between the second and third FBs. Alternatively, the length of the delay may be divided into three delay parts with one being added at the beginning of the first FB and two respectively between the three FBs.

The delay as a whole or a delay part may be added using a delay code. A delay code may be a loop code with an incremented counter and the loop ends until the counter value reaches a value set corresponding to the length of the delay as a whole or the length of delay part to be added to the control program to be tested. In the loop code, one or more meaningless instructions can be added to adjust the length of delay, for example, by adding a NOP instruction (No Operation instruction). Alternatively, it is also possible to simply add a number of NOP instructions in series without using a loop as the delay code, of which the total execution time of the NOP instructions corresponds to the length of delay to be added. Alternatively, the delay code may be a sleep instruction or a wait instruction to instruct the system to sleep or wait for a certain time period. Alternatively, the delay code may be realized by setting a timer provided by the system, by which when a timer set with a value corresponding to a delay as a whole or a delay part starts, the execution of the control program to be tested is paused and the CPU may be used for other programs, and the execution of the control program to be tested is resumed after the timer expires. Alternatively, the delay code may be realized by starting spin-lock to interrupt one or more cores of the PLC for executing the control program to be tested. Two or more of the above alternatives may be combined for realizing a delay as a whole or a delay part.

The delay as a whole or a delay part may be added by adding a delay before sending an internal message within the control program, e.g., before sending an output value from one FB to its down-streaming FB. For example, the control program to be tested may comprise a FB chain, including a plurality of FBs, wherein two adjacent FBs in the FB chain, including a first FB and a second FB as the immediately down-streaming FB of the first FB, wherein the result of the execution of the first FB is to send an output value to the second FB, so that the second FB can be executed based on the output value. In this example, the delay as a whole or a delay part may be added by adding a delay before the first FB sending the output value. In a further example, the first FB and the second FB may be implemented respectfully in two collaborating PLCs in the industrial automation system. In this case, the delay as a whole or a delay part may be added before the first FB sending the output value to the communication link between the two collaborating PLCs, e.g., on a field bus connecting the two PLCs.

In the delay forms (i) and (ii) as described above, the concrete length of the delay to be added may be determined before the CPU starts the execution of the control program to be tested, and thus the concrete length of the delay as a whole or the concrete length of each delay part may be set in advance.

In the delay forms (iii) until (v) as described above, the concrete length of the delay to be added can only be determined after the CPU starts the execution of the control program to be tested. Hence, the length of the delay as a whole or the length of each delay part may be set as a variable, of which the value can be set after the corresponding concrete length is calculated based on the obtained time lapsed and/or the obtained rest time of the predefined time period. The setting of the variable may be performed by the software that controls an emulation, or by adding program codes into the control program before the added delay.

The form of delay to be added, as one of the forms (i), (ii), (iii), (iv) and (v) as described above, may be input by a tester, but may also be programed in a computer program that controls an emulation, or in a computer program that controls the programming of the control program to be tested so that the corresponding delay codes, variable setting codes may be added into the control program at appropriate positions.

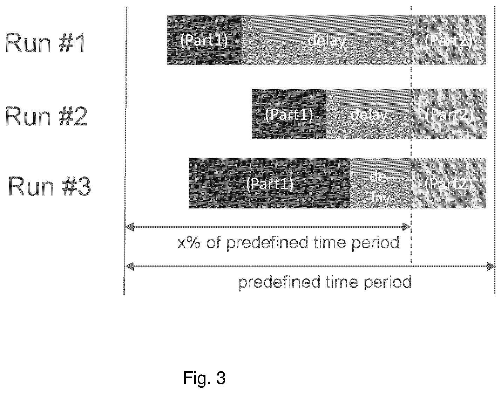

Fig. 3 shows an example of added delay. In this example, a delay in form (iv) as a whole is added between a Part 1 and a Part 2 of a control program. In the first run of the test, the Part 1 is executed by the CPU quite early and thus a long delay is actually added until x% of the predefined time, and then the Part 2 is executed. In the second run of the test, the Part 1 is executed by the CPU quite lately and thus a shorter delay is actually added until x% of the predefined time. In the third run of the test, the Part 1 is executed by the CPU quite early but it takes very long time for the CPU to complete the execution of Part 1, and as a result a very short delay is actually added.

Further, whether the delay is added as a whole or divided into a plurality of delay parts to be added in a distributed manner, as well as how to divide the delay into delay parts, may be input by a tester or may be programed in a computer program that controls an emulation, or in a computer program that controls the programming of the control program to be tested so that the corresponding delay codes, variable setting codes may be added into the control program at appropriate positions.

Furthermore, whether the delay as a whole or a delay part is added at the beginning of the control program or at the beginning or the end of a FB may be input by a tester or may be programed in a computer program that controls an emulation, or in a computer program that controls the programming of the control program to be tested so that the corresponding delay codes, variable setting codes may be added into the control program at appropriate positions.

In other words, all the options concerning the delay to be added may be set by a tester through text inputs or a graphic user interface during the testing, or may be programed into a computer program so that the delay can be added automatically.

It is also provided with an execution environment adapted for executing the above-described scheme for testing the execution time of a control program implemented in one or more PLCs in an industrial automation system.

The execution environment may include an emulation environment with a computer program that controls the emulation. Alternatively, the execution environment may include a real established industrial automation system with a computer program that controls the programming of the control program to be tested.

Further, it is provided a computer program product for performing the above-described scheme for testing the execution time of a control program implemented in one or more PLCs in an industrial automation system. Furthermore, it is provided a computer readable storage medium for storing the computer program product.

The solution described above artificially pushes the tests closer to the worst-case situation, so that the number of tests may be drastically reduced since otherwise a large number of tests are needed until an anomality happens. Thus, the costs for testing as well as the costs for developing the control program and the industrial automation system can be significantly reduced. Further, since the worst-case situation can be tested and optimization of the control program as well as the system may be conducted if anomality happens, which allows a design of a more reliable system.

The above description is only for illustration purpose but not to limit the scope of protection. Further modifications and alterations may be made within the scope of protection as set out in the claims.

## Claims

1. A method of testing a control program implemented in one programmable logic controller, PLC, or a plurality of collaborating PLCs of an industrial automation system,
the method comprising:
adding a delay to the control program;
running the industrial automation system;
checking whether the control program is completely executed within a predefined time period, wherein the predefined time period starts at a starting time point at which the control program is triggered, or is planned to be triggered, to be executed.

2. The method of claim 1, wherein the delay is set as:
a value of time period; or
a percentage of the predefined time period; or
a percentage of the rest time of the predefined time period; or
until a percentage of the predefined time period; or
until an amount of time before the end of the predefined time period.

3. The method of claim 1 or 2, wherein
the delay as a whole is added to the control program; or
the delay is divided into a plurality of delay parts and the plurality of delay parts are added into the control program in a distributed manner.

4. The method of claim 3, wherein
the delay as a whole or a delay part is added to the control program through adding a delay code into the control program, wherein the delay code includes at least one of:
a loop code;
one or more No-Operation instructions;
a sleep instruction or a wait instruction;
a timer instruction;
an instruction for activate spin lock.

5. The method of claim 3 or 4, wherein the control program comprises a functional block, FB, chain, including a plurality of FBs, and the delay as a whole or a delay part is added at the beginning of one of the FBs or at the end of one of the FBs.

6. The method of claim 5, wherein the delay as a whole or a delay part is added at the end of an FB but before the FB sends out an output value to a down-streaming FB.

7. The method of claim 6, wherein when the delay as a whole or a delay part is added between two adjacent FBs in the FB chain including a first FB and a second FB as the immediately down-streaming FB of the first FB, and the first FB and second FB are implemented respectfully in two of the collaborating PLCs, the delay as a whole or the delay part is added before sending the output value from the first FB to the second FB to the communication link between the two collaborating PLCs.

8. The method of any of the preceding claims, wherein the step of checking whether the control program is completely executed within the predefined time period is implemented through a watchdog.

9. An execution environment, adapted for executing the method of any one of preceding claims.

10. The execution environment of claim 9, comprising an emulation environment that emulates the operation of the industrial automation system and a computer program that controls the emulation.

11. The execution environment of claim 9, comprising a real establishment of the industrial automation system and a computer program that controls the programming of the control program to be tested.

12. A computer program including instructions, when executed by a computing device, enabling the computing device to control the performance the method of any one of claims 1 to 8.

13. A computer readable storage medium, storing the computer program of claim 12.
